Europäisches Patentamt

European Patent Office

Office européen des brevets

(11) Veröffentlichungsnummer: **0 142 752**
A2

(12) # EUROPÄISCHE PATENTANMELDUNG

(21) Anmeldenummer: **84113166.7**

(22) Anmeldetag: **02.11.84**

(51) Int. Cl.⁴: **B 60 B 17/00**
**B 60 B 37/08, B 60 B 9/00**

(30) Priorität: **21.11.83 DE 3341950**

(43) Veröffentlichungstag der Anmeldung:
**29.05.85 Patentblatt 85/22**

(84) Benannte Vertragsstaaten:
**AT BE CH DE FR GB IT LI SE**

(71) Anmelder: **Clouth Gummiwerke AG**
**Niehler Strasse 92 - 116**
**D-5000 Köln 60(DE)**

(72) Erfinder: **Ortwein, Hermann**
**Niehler Kirchweg 155**
**D-5000 Köln 60(DE)**

(72) Erfinder: **Krettek, Otmar, Prof. Dr.**
**Höhenweg 70**
**D-5100 Aachen(DE)**

(72) Erfinder: **Nicolin, Johannes, Dr.**
**Bogenstrasse 37**
**D-5100 Aachen(DE)**

(74) Vertreter: **Happe, Otto, Dipl.-Ing.**
**Isselburger Strasse 12**
**D-5000 Köln 60(DE)**

(54) **Radsatz für Schienenfahrzeuge.**

(57) Bei einem Radsatz für Schienenfahrzeuge, dessen beiden Räder (2) sich elastisch gegeneinander verdrehen können, sind die beiden Räder (2) drehbar auf einer gemeinsamen Achse (1) angeordnet. An jedes der beiden Räder (2) ist eine Hohlwelle (3) befestigt, beispielsweise angeflanscht. Die beiden Hohlwellen (3) sind elastisch miteinander verbunden.

EP 0 142 752 A2

Croydon Printing Company Ltd.

Radsatz für Schienenfahrzeuge

Die Erfindung betrifft einen Radsatz für Schienenfahrzeuge, dessen beiden Räder sich elastisch gegeneinander verdrehen können.

Radsätze der vorgenannten Art werden für Schienenfahrzeuge mit extrem hohen Fahrgeschwindigkeiten verwendet; sie gewährleisten einen ruhigen Lauf des Fahrzeugs und kompensieren die negativen Wirkungen von unvermeidlichen Gleislagestörungen.

Bei einem bekannten Schienenfahrzeug sind die beiden Räder jedes Radsatzes auf je eine Welle angeordnet und die beiden Wellen sind so miteinander gekuppelt, daß Drehmomente von der einen Welle auf die andere übertragen werden können (DE-OS 23 50 020). Die Übertragung des Drehmomentes erfolgt mittels mehrerer Elemente, die in einem an dem Drehgestell vorgesehenen mittleren Längsträger gelagert sind. Radsätze dieser Art können nur in einem hierfür eigens geschaffenen Drehgestell eingesetzt werden.

Es ist auch bereits bekannt, die beiden Räder eines Radsatzes drehbar auf einer gemeinsamen Achse anzuordnen. In diesem Falle sind die Räder über eine geteilte Hohlwelle miteinander verbunden (DE-OS 26 14 166; DE-AS 28 48 398). Die Hohlwellenteile sind mittels einer Kupplung verbunden, deren Schlupf mittels eines Reglers bei zunehmender Fahrgeschwindigkeit vergrößert und bei abnehmender Fahrgeschwindigkeit vermindert wird. Einerseits ist eine solche Einrichtung sehr aufwendig und störungsanfällig; andererseits ist jeweils ein bestimmter Schlupf vorgegeben, d. h. die beiden Räder können sich in ihrer Winkelstellung zueinander nicht allen Gegebenheiten beliebig anpassen.

0142752

Der Erfindung liegt die Aufgabe zugrunde, einen Radsatz der eingangs genannten Art so auszubilden, daß er in jedem Drehgestell eingesetzt werden kann und bei dem sich die Winkelstellung der beiden Räder zueinander allen Gegebenheiten beliebig anpassen kann. Diese Aufgabe wird durch die im Anspruch 1 angegebene Erfindung gelöst.

Eine zweckmäßige Ausgestaltung der Erfindung ist im Anspruch 2 beschrieben.

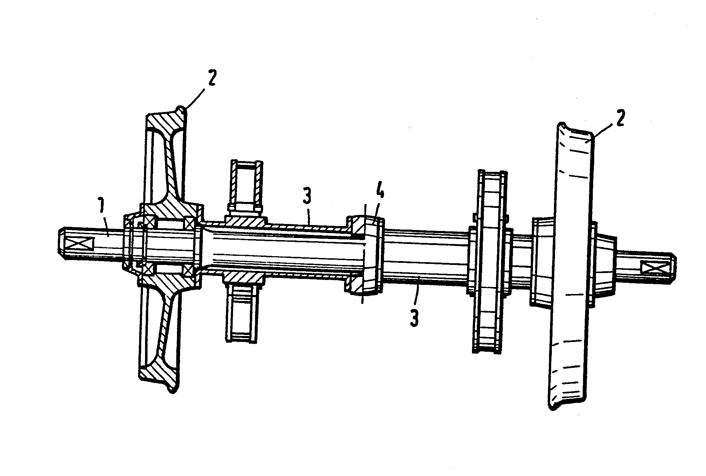

Ein Ausführungsbeispiel der Erfindung ist in der Zeichnung dargestellt, wobei die rechte Hälfte den Radsatz in Vorderansicht und die linke Hälfte den Radsatz in einem Längsschnitt zeigt.

Der Radsatz besteht aus einer Achse 1, auf der die beiden Räder 2 drehbar gelagert sind. An die Räder 2 sind Hohlwellen 3 angeflanscht, die ihrerseits über mindestens ein elastisches Element 4 miteinander verbunden sind.

Ansprüche:

1. Radsatz für Schienenfahrzeuge, dessen beiden Räder sich elastisch gegeneinander verdrehen können, dadurch gekennzeichnet, daß die beiden Räder (2) drehbar auf einer gemeinsamen Achse (1) angeordnet sind, daß an jedes der beiden Räder (2) eine Hohlwelle (3) befestigt, beispielsweise angeflanscht ist, und daß die beiden Hohlwellen (3) elastisch miteinander verbunden sind.

2. Radsatz für Schienenfahrzeuge nach Anspruch 1, dadurch gekennzeichnet, daß die elastische Verbindung der beiden Hohlwellen (3) durch gummielastische, viskoelastische oder hydraulische Elemente erfolgt.